# EUROPEAN PATENT SPECIFICATION

(11) **EP 4 261 485 B1**
(45) Date of publication and mention of the grant of the patent: **26.06.2024**
(21) Application number: 23167688.3
(22) Date of filing: 13.04.2023
(51) Int. Cl.: F26B 15/12

(54) **TREATMENT SYSTEM FOR LONG-CUT PASTA**
BEHANDLUNGSSYSTEM FÜR LANGSCHNITTTEIGWAREN
SYSTÈME DE TRAITEMENT POUR PÂTES ALIMENTAIRES À COUPE LONGUE

(30) Priority: 14.04.2022 IT 202200007514
(43) Date of publication of application: 18.10.2023
(73) Proprietor: Fava S.p.A., 44042 Cento (FE) (IT)
(72) Inventor: FAVA, Enrico, 44042 Cento (FE) (IT); DALL'AGATA, Renato, 35030 Selvazzano Dentro (PD) (IT); TRINCA, Fabio, 31050 Vedelago (TV) (IT); ALBERGHINI, Luca, 44042 Cento (FE) (IT)
(74) Representative: Frare, Paolo

(56) References cited:
- EP-B1- 0 195 394
- FR-A- 1 457 877
- JP-A- S58 170 445
- US-A- 2 583 847
- US-A- 2 732 627
- US-A- 3 094 398

## Description

The present invention refers to a treatment system for long-cut pasta.

It should be noted that in the present text, by the expression "long-cut pasta" it is understood to mean pasta that has a threadlike or ribbon-like conformation, with a length much greater (at least 20 times greater) than its transversal extension, such as spaghetti, linguine, bucatini, tagliatelle, etc.; it should also be noted that in the present text, even when not specified, the expression "pasta" will always refer to "long-cut pasta".

Nowadays, treatment systems for long-cut pasta are known comprising a drying device and a cooling device which is placed downstream of said drying device.

The long-cut pasta, once extruded, is typically loaded astride rods, the so-called "pipes", arranged with their horizontal longitudinal axis, which are moved, perpendicularly to their longitudinal axis, inside the drying device and, subsequently, the cooling device.

Inside the drying device the pasta is subjected, for predetermined time intervals, to predetermined values of temperature and relative humidity, so that a desired amount of water is removed therefrom, and a desired stiffening is achieved (the so-called vitrification).

EP 0 195 394 B1 discloses a machine for drying paste food products according to the prior art.

US 3 094 398 A discloses an apparatus for drying macaroni products according to the prior art.

In particular, solutions are known in which the pasta remains in a region of pre-drying of the drying device for a period of time lasting about 40-45 minutes, with indicative increasing temperature from 50 to 90°C, during which the average humidity percentage of pasta goes from about 28% to about 16-18%.

In such known solutions, the pasta then passes to a region of drying of the drying device, where it remains for a period of time equal to about 2 hours, in which its average humidity percentage drops to around 12-12.50.

At the exit of the region of drying, however, the percentage of humidity in the central core of the pasta still remains at a higher value than the average humidity, and in particular higher than the humidity level on the external surface of the pasta.

In order to make the humidity level as uniform as possible between the core of pasta and its external surface (thereby avoiding the formation of cracks or imperfections in the pasta itself due to the unevenness of the humidity), the pasta is then brought in a region of stabilisation of the drying device, where it is subjected for a certain time to predetermined values of temperature and relative humidity, such as to increase by a certain degree (usually about 2-3%) the humidity level on the external surface of the pasta, and thus bring it closer to the value of the humidity in the core thereof.

To prevent hot and humid air exiting the zone of stabilisation of the drying device from entering directly into the cooling device, which is much colder than said air, causing the formation of high quantities of condensate inside said cooling device (which condensate could ruin the pasta present therein), the inlet of the cooling device is positioned spaced from the outlet of the drying device; in such known systems, the rods on which the pasta is loaded, once they have exited from the drying device, do not thus enter directly into the cooling device, but they are first passed through a transfer device that has the purpose of creating a discontinuity between the internal zone of the drying device and the internal zone of the cooling device and, at the same time, of allowing a continuity in the movement of the support elements between the two devices.

Once the transfer device is crossed, the rods, and the pasta loaded on them, are then introduced into the cooling device.

By passing through the cooling device, the pasta is cooled in a controlled temperature environment, so that it exits from said cooling device at a temperature close to ambient temperature (generally comprised between 20 and 30°C).

The cooling along the cooling device must take place gradually, so as to ensure a good organoleptic and aesthetic quality to the final product.

The gradual cooling is achieved with a slow cooling, guaranteed by a reduced temperature difference between the pasta and the surrounding air, throughout the cooling device.

Since the temperature of pasta decreases proceeding from the inlet toward the outlet of the cooling device, in order that a substantially constant temperature difference is ensured throughout the crossing of the same, also the temperature of the air surrounding the pasta varies, decreasing the closer to the outlet of said cooling device.

This solution of known type, however, has some drawbacks, which will be explained below.

The pasta, which exits from the drying device at a temperature equal to about 80°C, after passing through the transfer device (where it remains in contact with the external environment, at a temperature generally comprised between 20°C and 30°C, for a time comprised between 40 and 60 seconds, cooling down by at most 3-4°C) enters the cooling device at a still very high temperature, generally comprised between 75°C and 77°C, causing a high heating of the air inside said cooling device; this phenomenon is more accentuated in the initial section of the cooling device.

The heating of the air inside the cooling device decreases its relative humidity, causing a high evaporation of the water contained in the pasta, which thus dries in an uncontrolled and potentially uneven manner; the high evaporation of the water contained in the pasta also causes an increase in the humidity of the air, which humidity then condenses in the zone of contact with the heat exchangers of the cooling device, in which cold water flows, which are generally positioned above the region in which the pasta passes, with the consequent problem of the condensation water dripping on the pasta, which causes visible aesthetic defects on the surface thereof, and the formation of water stagnations that can cause the generation of bad smells and result in corrosion problems.

In order to counteract the heating of the air inside the cooling device, and to prevent the undesirable effects resulting therefrom, it is known to reduce as much as possible the temperature of the fluid that passes through the heat exchangers, which however increases the energy consumptions of the device, and therefore of the entire treatment system for pasta.

In order to counteract the rise in temperature at the inlet to the cooling device due to the high temperature of the pasta at the inlet, it is also known to nebulise water at a relatively low temperature into the air surrounding the pasta; this solution, however, results in an increase in the humidity of the air, and the consequent generation of condense, particularly on the heat exchangers, with the resulting problems described above.

Furthermore, since gradual cooling, and hence a reduced temperature difference between the pasta and the surrounding air, must be ensured throughout the cooling device, as the temperature of the pasta entering the cooling device is quite high, said cooling device must be relatively very long (typically from 4 to 10 m, as a function of the production size), and therefore bulky and expensive.

The main aim of the present invention is to solve the problems listed above, and therefore to realize a treatment system for long-cut pasta that allows to reduce the temperature of the long-cut pasta, and of the rods that support it, entering the cooling device, and consequently the temperature of the air inside the cooling device, in particular near the inlet region for pasta.

Within the scope of this aim, an object of the present invention is to allow reducing the encumbrance, and consequently also the cost, of the cooling device of a treatment system for long-cut pasta with respect to the cited prior art.

Another object of the present invention is to eliminate or reduce the consumption of nebulised water to lower the temperature of the air entering the cooling device.

Yet another object is to reduce the energy consumption related to the decrease of the temperature of the water in the heat exchangers for cooling the air inside the cooling device.

A further object of the present invention is to prevent a rapid and an uncontrolled evaporation of the humidity contained in the pasta from taking place within the cooling device, such that an excessive drying thereof is caused.

The aim and objects according to the present invention are achieved by a treatment system for long-cut pasta comprising:
- support means on which to hang long-cut pasta in such a way that it protrudes from the support means with at least one first end portion of its, substantially straight and arranged in a substantially vertical position;
- a drying device for drying and stabilising long-cut pasta;
- a cooling device for cooling long-cut pasta;
- a transfer device, positioned between the drying device and the cooling device, wherein long-cut pasta coming out of the drying device is passed before reaching the cooling device, the transfer device comprising transport means configured to transport the support means along a trajectory which comprises a first section, having a vertical component directed upwards, and a second section, having a vertical component directed downwards, wherein the system comprises ventilation means arranged in such a way to send a first air flow, generated by them, toward long-cut pasta supported by the support means while they travel the first section and/or the second section of the trajectory.

It is pointed out that "*end portion substantially straight*" of the long-cut pasta is understood to mean a portion of the long-cut pasta (which has a threadlike or ribbon-like conformation) which starts from a free end thereof and extends longitudinally for a certain stretch, and is arranged along a straight or substantially straight line; in particular, when the long-cut pasta is hung on the support means, the first end portion is kept substantially straight and in a substantially vertical position by effect of the force of gravity acting thereon.

It should be noted that by the expression "in a substantially vertical position", it is understood to mean aligned with the longitudinal axis thereof perpendicular or substantially perpendicular to the horizontal surface on which the treatment system for long-cut pasta according to the invention rests, in use.

Further advantageous features of the treatment system for long-cut pasta according to the invention are reported in the dependent claims.

The features and advantages of the present invention will be more apparent from the following description, which is to be understood as exemplifying and not limiting, with reference to the appended schematic drawings, wherein:
- Figure 1 is a schematic side view of an advantageous embodiment of a treatment system for long-cut pasta according to the invention;
- Figure 2 is a schematic front view of the transfer device employed in the advantageous embodiment of the treatment system for long-cut pasta of Figure 1;
- Figure 3 is a schematic side view of the treatment system for long-cut pasta of Figure 1 in which the trajectory followed by the pasta inside the transfer device is highlighted with a dashed line;
- Figure 4 is a schematic side view of a further advantageous embodiment of the treatment system for long-cut pasta according to the invention in which the trajectory followed by the pasta inside the transfer device is highlighted with a dashed line.

With reference to the accompanying figures, a system for the treatment of long-cut pasta according to the invention has been indicated overall with number 1.

Advantageously, in use, the system rests on a horizontal surface 17, such as for example the floor of an industrial plant for the production of pasta.

The treatment system 1 for long-cut pasta 2 comprises support means 3 for hanging long-cut pasta 2 in such a way that it protrudes from said support means 3 with at least one first end portion 4a of its, substantially straight and arranged in a substantially vertical position.

It is reiterated that by "*end portion substantially straight*" of the long-cut pasta 2, it is understood to mean a portion of the long-cut pasta 2 (which has a threadlike or ribbon-like conformation) which starts from a free end thereof and extends longitudinally for a certain stretch, and is arranged along a straight or substantially straight line; in particular, when the long-cut pasta 2 is hung on the support means 3, the first end portion 4a is kept substantially straight and in a substantially vertical position by effect of the force of gravity acting thereon.

It should be noted that by the expression "in a substantially vertical position" it is understood to mean aligned with the longitudinal axis thereof perpendicular or substantially perpendicular to the horizontal surface 17 on which the treatment system 1 for long-cut pasta 2 according to the invention rests, in use.

Advantageously, the support means 3 comprise a plurality of rods 3a, substantially straight, preferably tubular in shape, preferably made of metallic material, such as for example anodized aluminium.

Advantageously, the long-cut pasta 2 hanging on the support means 3 protrudes therefrom also with a second end portion 4b of its, substantially straight and arranged in a substantially vertical position; it is pointed out that when the long-cut pasta 2 is hung on the support means 3, the second end portion 4b is kept substantially straight and in a substantially vertical position by effect of the force of gravity acting thereon.

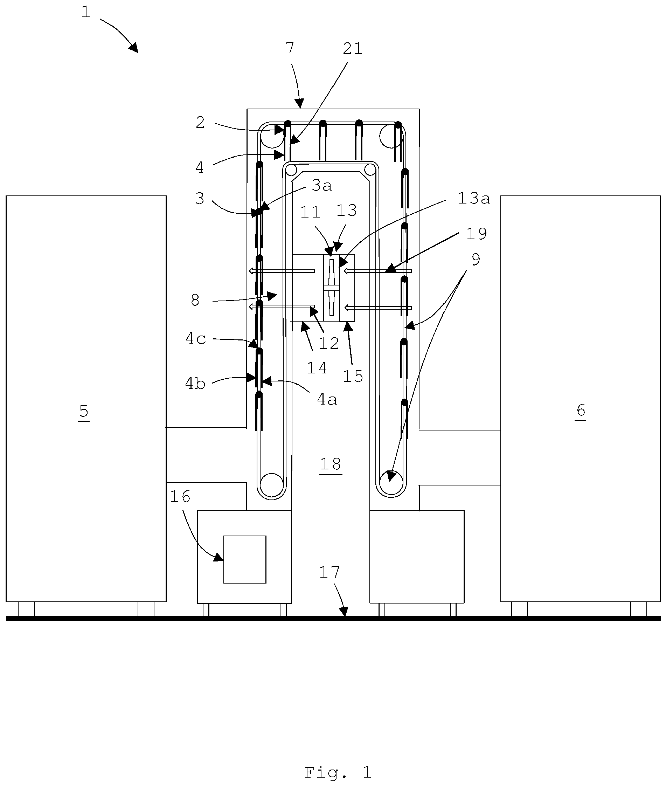

Advantageously, the long-cut pasta 2 is hung on the support means 3 by folding said long-cut pasta 2 approximately in half, so as to assume, in a side view, like for example the one of Figure 1, an approximately inverted "U" arrangement, in which the first end portion 4a and the second end portion 4b constitute the two arms of the "U", and are joined to each other by an intermediate, curved, portion 4c that engages with the support means 3 (in particular with a rod 3a in the case where the support means 3 comprise a plurality of rods 3a).

The system 1 comprises a drying device 5 (schematically represented in the accompanying figures as a rectangle), for drying and stabilising the long-cut pasta 2; such a drying device 5 is known in the field of the systems for the treatment of pasta, and will therefore not be described in detail.

The system 1 further comprises a cooling device 6 (schematically represented in the accompanying figures as a rectangle), for cooling long-cut pasta 2; also the cooling device 6 is known in the sector of the systems for the treatment of pasta, and will therefore not be described in detail.

The system 1 further comprises a transfer device 7, positioned between the drying device 5 and the cooling device 6, wherein long-cut pasta 2, coming out of the drying device 5, is passed before reaching the cooling device 6.

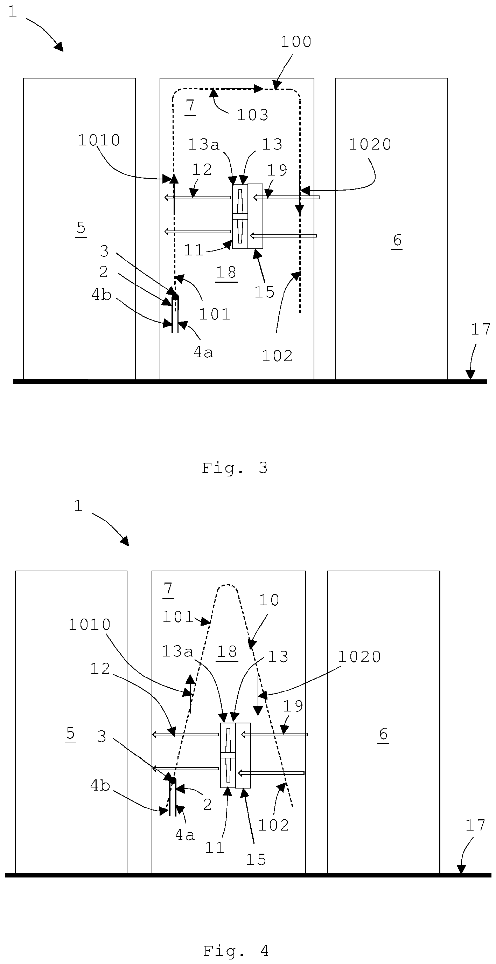

The transfer device 7 comprises transport means 9 configured to transport the support means 3 along a trajectory 10 which comprises a first section 101, having a vertical component directed upwards (schematically indicated in Figures 3 and 4 with an arrow 1010), and a second section 102, having a vertical component directed downwards (schematically indicated in Figures 3 and 4 with an arrow 1020).

Advantageously, along the trajectory 10, the support means 3, and the long-cut pasta 2 supported by them, are in contact with the environment external to the system 1, and therefore with the ambient temperature and pressure.

Advantageously, the transport means 9 are configured in such a way that the support means 3, and the long-cut pasta 2 supported by them, travel the first section 101 in a time comprised between 22 and 50 seconds, preferably as a function of the production size of the system 1.

Advantageously, in the case where the support means 3 comprise a plurality of rods 3a, substantially straight, on which the long-cut pasta 2 is hung, the transport means 9 are configured to move the rods 3a along a trajectory 10 perpendicular to the longitudinal axis of said rods 3a, keeping the same parallel to each other.

For example, the transport means 9 can be transport chains configured so as to transport the rods 3a along the trajectory 10, keeping the same parallel to each other and arranged with their longitudinal axis perpendicular to the trajectory 10.

Advantageously, the transfer device 7 comprises a frame 8 which supports the transport means 9.

In an advantageous embodiment, the trajectory 10 comprises a third section 103, having a component substantially horizontal, which connects the first section 101 and the second section 102 together.

In an advantageous embodiment, such as for example the one schematically illustrated in Figure 3, the first section 101 and the second section 102 are straight and substantially vertical, and the third section 103, which joins them, is substantially straight and substantially horizontal, so that the trajectory 10 has, in a side view, a substantially inverted "U" shape.

In a further advantageous embodiment, such as for example the one illustrated in Figure 4, the first section 101 is joined, at one end thereof, directly to the second section 102, so that the trajectory 10 has, in a side view, a substantially inverted "V" shape, preferably with the vertex of the V rounded.

The transfer device 7 comprises ventilation means 11 positioned in such a way as to send a first air flow 12 (schematically represented in the accompanying figures by arrows), generated by them, towards the long-cut pasta 2 supported by the support means 3 while they travel the first section 101 and/or the second section 102 of the trajectory 10.

Advantageously, the ventilation means 11 are positioned in such a way that said first air flow 12 hits the first end portion 4a of the long-cut pasta 2 substantially perpendicularly to it.

Preferably, the ventilation means 11 are positioned in such a way that said first air flow 12 also hits the second end portion 4b, if present, of the long-cut pasta 2, more preferably substantially perpendicularly to it.

Advantageously, the ventilation means 11 comprise one or more fans 13, preferably comprising a delivery duct 14 configured to direct a first air flow 12, generated by the one or more fans 13, toward long-cut pasta 2 supported by the support means 3 while they travel the first section 101 and/or the second section 102 of the trajectory.

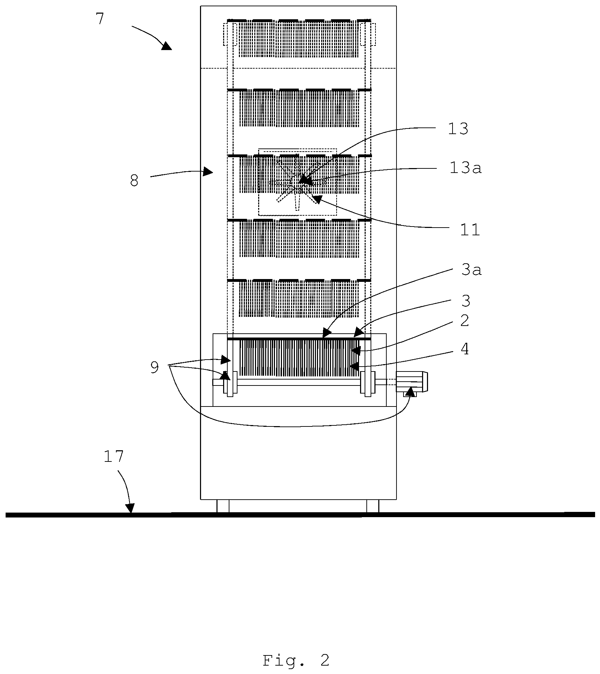

In an advantageous embodiment of system 1 according to the invention, such as for example the one illustrated schematically in Figures 1 and 2, the one or more fans 13 comprise an axial flow fan 13a.

In a further advantageous embodiment, the one or more fans 13 may comprise a tangential flow fan, not represented in the accompanying figures.

In an advantageous embodiment, such as for example the one illustrated in the accompanying figures, between the first section 101 and the second section 102 of the trajectory 10 an intermediate region 18 is comprised, and the ventilation means 11 are positioned in said intermediate region 18.

Advantageously, the length of the trajectory 10 is comprised between 7 and 8 meters.

In an advantageous embodiment, the ventilation means 11 are configured to suck a second air flow 19 (schematically illustrated in the accompanying figures by arrows) which passes through long-cut pasta 2 supported by the support means 3 while they travel the first section 101 and/or the second section 102 of the trajectory 10.

In an advantageous embodiment, such as for example the one illustrated in the accompanying figures, in which the ventilation means 11 comprise at least one axial flow fan 13a, and the same is arranged in the intermediate region 18, such at least one axial flow fan 13a is configured to generate a first air flow 12, which is directed toward long-cut pasta 2 supported by the support means 3 while they travel the first section 101 of the trajectory 10, and to suck a second air flow 19 which passes through the long-cut pasta 2 supported by the support means 3 while they travel the second section 102 of the trajectory 10.

In an advantageous embodiment, such as for example the one illustrated in Figures 1 and 2, the transfer device 7 comprises electronic control means 16 (schematically represented in Figure 1 with a rectangle) operatively connected to the ventilation means 11 and to the transport means 9 in order to control the same; in particular, in an advantageous embodiment, the ventilation means 11 are configured in such a way as to be able to vary the flow-rate of the first air flow 12 generated by them, and the electronic control means 16 are advantageously configured for controlling the ventilation means 11 in such a way as to make them deliver a desired air flow-rate (for example comprised between 16,000 and 24,000 m³/hour).

In a further advantageous embodiment, the transport means 9 are configured in such a way as to be able to vary the speed of advance along the trajectory 10 of the support means 3, and the electronic control means 16 are advantageously configured to control the transport means 9 in such a way as to advance the support means 3 at a desired speed along the trajectory 10 (for example comprised between 4 and 9 m/min, preferably as a function of the production size of the system 1).

Advantageously, the transport means 9 are configured in such a way that the support means 3, and the long-cut pasta 2 supported by them, travel the first section 101 in a time comprised between 20 and 50 seconds, preferably as a function of the production size of the system 1.

Advantageously, the transport means 9 are configured in such a way that the support means 3, and the long-cut pasta 2 supported by them travel the second section 102 in a time comprised between 20 and 50 seconds, preferably as a function of the production size of the system 1.

Advantageously, the transport means 9 are configured in such a way that the support means 3, and the long-cut pasta 2 supported by them, travel the entire trajectory 10 in a time comprised between 50 and 120 seconds, advantageously as a function of the production size of the system 1.

Advantageously the electronic control means 16 are configured to control the flow-rate of the first air flow 12 and the speed of advance of the support means 3 along the trajectory 10 the one as a function of the other, or independently of each other.

In an advantageous embodiment, the ventilation means 11 are configured to generate a first air flow 12 having a temperature and a humidity substantially equal to those of the environment (for example the interior of an industrial warehouse for the production of pasta) in which the transfer device 7 is positioned; for example, in the case where the ventilation means 11 comprise one or more fans 13, these are configured to suck air directly from the environment in which the transfer device 7 is positioned, and to generate the first air flow 12 by moving that air, without changing the temperature or the humidity thereof.

In a further advantageous embodiment, the ventilation means 11 are configured to generate a first air flow 12 having a temperature and/or a humidity different from those of the environment in which the transfer device 7 is positioned. In this case, for example, the ventilation means 11 may advantageously comprise conditioning means 15 (schematically illustrated in the accompanying figures by a rectangle), for example a heat exchanger (for example of the air-fluid type), not illustrated, for conditioning the air that passes through the ventilation means 11 and generates the first air flow 12.

In an advantageous embodiment, the electronic control means 16 are operatively connected to the conditioning means 15 and configured for controlling them in such a way as to control the temperature of the air that passes through the ventilation means 11 and generates the first air flow 12.

The operation of the system 1 according to the invention is described below.

After having loaded long-cut pasta 2 to be dried onto the support means 3 (for example onto a plurality of rods 3a), the latter are introduced into the drying device 5, from which they come out with a desired value of temperature (advantageously equal to about 80°C) and of humidity; after having come out from the drying device 5, said support means 3, and the long-cut pasta 2 supported by them, pass to the transfer device 7, where the support means 3 are associated with the transport means 9.

The support means 3, and the long-cut pasta 2 supported by them, are then moved by the transport means 9 along the trajectory 10, travelling first the first section 101, then, if present, the third section 103, and finally the second section 102, until they exit the transfer device 7, from which they then pass into the cooling device 6, in which the long-cut pasta 2 is subjected to the desired cooling, so as to then exit the cooling device 6 itself at a temperature close to ambient temperature (comprised between about 20 and 30 °C).

In the transfer device 7, while the long-cut pasta 2 passes through the first section 101 and/or the second section 102 of the trajectory 10, the ventilation means 11 generate a first air flow 12, at ambient temperature (therefore between about 20°C and 30°C) or at conditioned temperature (for example lower than ambient temperature) that hits said long-cut pasta 2, reducing the temperature thereof, for example by about 10-15°C.

The temperature of the long-cut pasta 2 that enters the cooling device 6 is therefore much lower than in the prior art, and preferably equal to or lower than about 65-70°C.

This significantly reduces the increase of the temperature at the inlet to the cooling device 6, due to the entry of the pasta, consequently reducing the problems related to this temperature increase.

It has thus been found that the treatment system for long-cut pasta according to the invention solves the aim and objects set out above.

In fact, the use of a system for the treatment of long-cut pasta according to the invention allows to introduce the long-cut pasta inside the cooling device at a significantly lower temperature than known treatment systems for pasta, thus reducing the temperature of the air inside said cooling device, in particular near the inlet region for the pasta.

A lower inlet temperature in the cooling device allows to reduce the length of the cooling section necessary to bring the temperature of the pasta from the inlet temperature to the ambient temperature, thus allowing to reduce the length, and therefore the overall encumbrance and the related costs, of such cooling device.

In addition, a lower temperature of the pasta entering in the cooling device allows to reduce the energy consumptions necessary to cool the air inside it.

Finally, a lower temperature of the pasta entering the cooling device prevents an undesired evaporation of the humidity contained in the pasta, and an excessive drying thereof in said cooling device.

## Claims

1. Treatment system (1) for long-cut pasta (2) comprising:
- support means (3) on which to hang long-cut pasta (2) in such a way that it protrudes from said support means (3) with at least one first end portion (4a) of its, substantially straight and arranged in a substantially vertical position;
- a drying device (5), for drying and stabilising long-cut pasta (2);
- a cooling device (6), for cooling long-cut pasta (2) ;
- a transferring device (7), positioned between said drying device (5) and said cooling device (6), wherein long-cut pasta (2) coming out of said drying device (5) is passed before reaching said cooling device (6), said transferring device (7) comprising transport means (9) configured to transport said support means (3) along a trajectory (10) which comprises a first section (101), having a vertical component directed upwards, and a second section (102), having a vertical component directed downwards,
**characterised by** comprising ventilation means (11) positioned in such a way to send a first air flow (12), generated by them, toward long-cut pasta (2) supported by said support means (3) while they travel said first section (101) and/or said second section (102) of said trajectory (10) .

2. System (1), as in claim 1, wherein said ventilation means (11) are positioned in such a way that said first air flow (12) hits said at least one first end portion (4a) of said long-cut pasta (2) substantially perpendicularly to it.

3. System (1), as in claim 1 or 2, wherein said ventilation means (11) comprise one or more fans (13) comprising a delivery duct (14) configured to direct said first air flow (12) generated by said one or more fans (13) toward long-cut pasta (2) supported by said support means (3) while they travel said first section (101) and/or said second section (102) of said trajectory (10).

4. System (1), as in one or more previous claims, wherein between said first section (101) and said second section (102) of said trajectory (10) an intermediate region (18) is comprised, said ventilation means (11) being positioned in said intermediate region (18).

5. System (1), as in one or more previous claims, wherein said trajectory (10) comprises a third section (103), having a component substantially horizontal, which connects said first section (101) and said second section (102) .

6. System (1), as in one or more previous claims, wherein the length oh said trajectory (10) is comprised between 7 and 8 meters.

7. System (1), as in one or more previous claims, wherein said ventilation means (11) are configured to suck a second air flow (19) which passes through long-cut pasta (2) supported by said support means (3) while they travel said first section (101) and/or said second section (102) of said trajectory (10).

8. System (1), as in one or more previous claims, wherein said transfer device (7) comprises electronic control means (16) operatively connected to said ventilation means (11) and to said transport means (9), in order to control them.

9. System (1), as in claim 8, wherein said ventilation means (11) are configured in such a way to be able to vary the flow-rate of said first air flow (12) generated by them, and said electronic control means (16) are configured for controlling said ventilation means (11) in such a way to make them to deliver a desired air flow-rate.

10. System (1), as in claim 8 or 9, wherein said transport means (9) are configured in such a way to be able to vary the speed of advance of said support means (3) along said trajectory (10), and said electronic control means (16) are configured to control said transport means (9) in such a way to advance said support means (3) at a desired speed along said trajectory (10).

11. System (1), as in one or more of the previous claims, wherein said ventilation means (11) are configured to generate a said first air flow (12) having a temperature and a humidity content substantially equal to those of the environment in which said transfer device (7) is positioned.

12. System (1), as in one or more claims from 1 to 10, wherein said ventilation means (11) are configured to generate a said first air flow (12) having a temperature and/or a humidity content different from those of the environment in which said transfer device (7) is positioned.

13. System (1), as in claim 12, wherein said ventilation means (11) comprise conditioning means (15) for conditioning the air that passes through said ventilation means (11) and generates said first air flow (12) .

14. System (1), as in claim 13, when it depends on claim 8, or on a claim depending on claim 8, wherein said electronic control means (16) are operatively connected to said conditioning means (15) and configured for controlling them in such a way to control the temperature of said air that passes through said ventilation means (11) and generates said first air flow (12).

15. System (1), as in claim 13 or 14, wherein said conditioning means (15) comprise a heat exchanger.

## Patentansprüche

1. Behandlungssystem (1) für lang geschnittene Nudeln (2), umfassend
- Trägermittel (3), an den lang geschnittenen Nudeln (2) so aufgehängt werden, dass sie aus den Trägermitteln (3) herausragen, wobei mindestens ein erster Endabschnitt (4a) davon im Wesentlichen gerade und in einer im Wesentlichen vertikalen Position angeordnet ist;
- eine Trocknungsvorrichtung (5) zum Trocknen und Stabilisieren von lang geschnittenen Nudeln (2);
- eine Kühlvorrichtung (6) zum Kühlen von lang geschnittenen Nudeln (2);
- eine Überführungsvorrichtung (7), die zwischen der Trocknungsvorrichtung (5) und der Kühlvorrichtung (6) positioniert ist, wobei die aus der Trocknungsvorrichtung (5) kommenden lang geschnittenen Nudeln (2) vor Erreichen der Kühlvorrichtung (6) passiert werden, wobei die Überführungsvorrichtung (7) Transportmittel (9) umfasst, die so konfiguriert sind, dass sie die Trägermittel (3) entlang einer Bahn (10) transportieren, die einen ersten Abschnitt (101) aufweisend eine nach oben gerichtete vertikale Komponente und einen zweiten Abschnitt (102) aufweisend eine nach unten gerichtete vertikale Komponente umfasst,
**dadurch gekennzeichnet, dass sie** Lüftungsmittel (11) umfasst, die so positioniert sind, dass sie einen ersten Luftstrom (12), der von ihnen erzeugt wird, in Richtung der von den Trägermitteln (3) getragenen lang geschnittenen Nudeln (2) leiten, während sie den ersten Abschnitt (101) und/oder den zweiten Abschnitt (102) der Bahn (10) durchlaufen

2. System (1) nach Anspruch 1, wobei die Lüftungsmittel (11) so positioniert sind, dass der erste Luftstrom (12) den mindestens einen ersten Endabschnitt (4a) der lang geschnittenen Nudeln (2) im Wesentlichen senkrecht zu diesem erreicht.

3. System (1) nach Anspruch 1 oder 2, wobei die Lüftungsmittel (11) ein oder mehrere Gebläse (13) umfassen, die eine Versorgungsleitung (14) aufweisen, die so konfiguriert ist, dass sie den ersten Luftstrom (12), der von dem einen oder den mehreren Gebläsen (13) erzeugt wird, auf die von den Trägermitteln (3) getragenen lang geschnittenen Nudeln (2) leitet, während sie den ersten Abschnitt (101) und/oder den zweiten Abschnitt (102) der Bahn (10) durchlaufen.

4. System (1) nach einem oder mehreren der vorhergehenden Ansprüche, wobei zwischen dem ersten Abschnitt (101) und dem zweiten Abschnitt (102) der Bahn (10) ein Zwischenbereich (18) vorgesehen ist und wobei die Lüftungsmittel (11) in dem Zwischenbereich (18) positioniert sind.

5. System (1) nach einem oder mehreren der vorhergehenden Ansprüche, wobei die Bahn (10) einen dritten Abschnitt (103) umfasst, der eine im Wesentlichen horizontale Komponente aufweist, die den ersten Abschnitt (101) und den zweiten Abschnitt (102) verbindet.

6. System (1), nach einem oder mehreren vorhergehenden Ansprüchen, wobei die Länge der Bahn (10) zwischen 7 und 8 Metern liegt.

7. System (1), nach einem oder mehreren vorhergehenden Ansprüchen, wobei die Lüftungsmittel (11) so konfiguriert sind, dass sie einen zweiten Luftstrom (19) ansaugen, der durch die von den Trägermitteln (3) getragenen lang geschnittenen Nudeln (2) passiert, während sie den ersten Abschnitt (101) und/oder den zweiten Abschnitt (102) der Bahn (10) durchlaufen.

8. System (1) nach einem oder mehreren der vorhergehenden Ansprüche, wobei die Überführungsvorrichtung (7) elektronische Steuermittel (16) umfasst, die operativ mit den Lüftungsmitteln (11) und den Transportmitteln (9) verbunden sind, um diese zu steuern.

9. System (1) nach Anspruch 8, wobei die Lüftungsmittel (11) so konfiguriert sind, dass sie in der Lage sind, die Durchflussmenge des von ihnen erzeugten ersten Luftstroms (12) zu ändern, und wobei die elektronischen Steuermittel (16) so konfiguriert sind, dass sie die Lüftungsmittel (11) so steuern, dass sie eine gewünschte Luftdurchflussmenge liefern.

10. System (1) nach Anspruch 8 oder 9, wobei die Transportmittel (9) so konfiguriert sind, dass sie in der Lage sind, die Vorschubgeschwindigkeit der Trägermittel (3) entlang der Bahn (10) zu ändern, und wobei die elektronischen Steuermittel (16) so konfiguriert sind, dass sie die Transportmittel (9) so steuern, dass sie die Trägermittel (3) mit einer gewünschten Geschwindigkeit entlang der Bahn (10) vorschieben.

11. System (1) nach einem oder mehreren der vorhergehenden Ansprüche, wobei die Lüftungsmittel (11) so konfiguriert sind, dass sie einen ersten Luftstrom (12) aufweisend eine Temperatur und einen Feuchtigkeitsgehalt erzeugen, die im Wesentlichen denen der Umgebung entsprechen, in der die Überführungsvorrichtung (7) positioniert ist.

12. System (1) nach einem oder mehreren der Ansprüche 1 bis 10, wobei die Lüftungsmittel(11) so konfiguriert sind, dass sie einen ersten Luftstrom (12) erzeugen, der eine Temperatur und/oder einen Feuchtigkeitsgehalt aufweist, die von denen der Umgebung, in der die Überführungsvorrichtung (7) positioniert ist, verschieden sind.

13. System (1) nach Anspruch 12, wobei die Lüftungsmittel (11) Konditionierungsmittel (15) zum Konditionieren der Luft umfassen, die durch die Lüftungsmittel (11) strömt und den ersten Luftstrom (12) erzeugt.

14. System (1) nach Anspruch 13, wenn es von Anspruch 8 abhängt, oder nach einem Anspruch, der von Anspruch 8 abhängt, wobei die elektronischen Steuermittel (16) operativ mit den Konditionierungsmitteln (15) verbunden sind und so konfiguriert sind, dass sie diese so steuern, dass sie die Temperatur der Luft steuern, die durch die Lüftungsmittel (11) strömt und den ersten Luftstrom (12) erzeugt.

15. System (1) nach Anspruch 13 oder 14, wobei die Konditionierungsmittel (15) einen Wärmetauscher umfassen.

## Revendications

1. Système de traitement (1) pour pâtes longues (2) comprenant:
- des moyens de support (3) sur lesquels suspendre les pâtes longues (2) d'une manière telle qu'elles fassent saillie à partir desdits moyens de support (3) avec au moins une première partie d'extrémité (4a) de celles-ci, sensiblement rectiligne et agencée dans une position sensiblement verticale;
- un dispositif de séchage (5), pour le séchage et la stabilisation des pâtes longues (2);
- un dispositif de refroidissement (6), pour le refroidissement des pâtes longues (2);
- un dispositif de transfert (7), positionné entre ledit dispositif de séchage (5) et ledit dispositif de refroidissement (6), dans lequel les pâtes longues (2) sortant dudit dispositif de séchage (5) passent avant d'atteindre ledit dispositif de refroidissement (6), ledit dispositif de transfert (7) comprenant des moyens de transport (9) configurés pour transporter lesdits moyens de support (3) le long d'une trajectoire (10) qui comprend une première section (101), ayant une composante verticale dirigée vers le haut, et une deuxième section (102), ayant une composante verticale dirigée vers le bas,
**caractérisé par le fait qu'**il comprend des moyens de ventilation (11) positionnés de manière à envoyer un premier flux d'air (12), généré par ceux-ci, vers les pâtes longues (2) portées par lesdits moyens de support (3) tandis qu'elles parcourent ladite première section (101) et/ou ladite deuxième section (102) de ladite trajectoire (10).

2. Système (1), selon la revendication 1, dans lequel lesdits moyens de ventilation (11) sont positionnés d'une manière telle que ledit premier flux d'air (12) est incident sur ladite au moins une première partie d'extrémité (4a) desdites pâtes longues (2) sensiblement perpendiculairement à celles-ci.

3. Système (1), selon la revendication 1 ou 2, dans lequel lesdits moyens de ventilation (11) comprennent un ou plusieurs ventilateurs (13) comprenant un conduit de distribution (14) configuré pour diriger ledit premier flux d'air (12) généré par lesdits un ou plusieurs ventilateurs (13) vers les pâtes longues (2) portées par lesdits moyens de support (3) tandis qu'elles parcourent ladite première section (101) et/ou ladite deuxième section (102) de ladite trajectoire (10).

4. Système (1), selon une ou plusieurs revendications précédentes, dans lequel entre ladite première section (101) et ladite deuxième section (102) de ladite trajectoire (10), une région intermédiaire (18) est comprise, lesdits moyens de ventilation (11) étant positionnés dans ladite région intermédiaire (18).

5. Système (1), selon une ou plusieurs revendications précédentes, dans lequel ladite trajectoire (10) comprend une troisième section (103), ayant une composante sensiblement horizontale, qui relie ladite première section (101) et ladite deuxième section (102).

6. Système (1), selon une ou plusieurs revendications précédentes, dans lequel la longueur de ladite trajectoire (10) est comprise entre 7 et 8 mètres.

7. Système (1), selon une ou plusieurs revendications précédentes, dans lequel lesdits moyens de ventilation (11) sont configurés pour aspirer un second flux d'air (19) qui traverse les pâtes longues (2) portées par lesdits moyens de support (3) tandis qu'elles parcourent ladite première section (101) et/ou ladite deuxième section (102) de ladite trajectoire (10).

8. Système (1), selon une ou plusieurs revendications précédentes, dans lequel ledit dispositif de transfert (7) comprend des moyens de commande électroniques (16) reliés de manière opérationnelle auxdits moyens de ventilation (11) et auxdits moyens de transport (9), afin de les commander.

9. Système (1), selon la revendication 8, dans lequel lesdits moyens de ventilation (11) sont configurés de manière à être aptes à faire varier le débit dudit premier flux d'air (12) généré par ceux-ci, et lesdits moyens de commande électroniques (16) sont configurés pour la commande desdits moyens de ventilation (11) de manière à les amener à distribuer un débit d'air souhaité.

10. Système (1), selon la revendication 8 ou 9, dans lequel lesdits moyens de transport (9) sont configurés de manière à être aptes à faire varier la vitesse d'avancement desdits moyens de support (3) le long de ladite trajectoire (10), et lesdits moyens de commande électroniques (16) sont configurés pour commander lesdits moyens de transport (9) de manière à faire avancer lesdits moyens de support (3) à une vitesse souhaitée le long de ladite trajectoire (10).

11. Système (1), selon l'une ou plusieurs des revendications précédentes, dans lequel lesdits moyens de ventilation (11) sont configurés pour générer un dit premier flux d'air (12) ayant une température et une teneur en humidité sensiblement égales à celles de l'environnement dans lequel ledit dispositif de transfert (7) est positionné.

12. Système (1), selon une ou plusieurs revendications de 1 à 10, dans lequel lesdits moyens de ventilation (11) sont configurés pour générer un premier flux d'air (12) ayant une température et/ou une teneur en humidité différentes de celles de l'environnement dans lequel ledit dispositif de transfert (7) est positionné.

13. Système (1), selon la revendication 12, dans lequel lesdits moyens de ventilation (11) comprennent des moyens de climatisation (15) pour la climatisation de l'air qui traverse lesdits moyens de ventilation (11) et génère ledit premier flux d'air (12).

14. Système (1), selon la revendication 13, lorsqu'elle dépend de la revendication 8, ou d'une revendication dépendant de la revendication 8, dans lequel lesdits moyens de commande électroniques (16) sont connectés de manière opérationnelle auxdits moyens de climatisation (15) et configurés pour les commander de manière à commander la température dudit air qui traverse lesdits moyens de ventilation (11) et génère ledit premier flux d'air (12).

15. Système (1), selon la revendication 13 ou 14, dans lequel lesdits moyens de climatisation (15) comprennent un échangeur de chaleur.
